# EUROPÄISCHE PATENTANMELDUNG

(11) **EP 4 414 246 A1**
(43) Veröffentlichungstag der Anmeldung: **14.08.2024**
(21) Anmeldenummer: 23218945.6
(22) Anmeldetag: 21.12.2023
(51) Int. Cl.: B62D 25/14, B62D 29/00

(54) **COCKPITQUERTRÄGER**

(71) Anmelder: GF Casting Solutions AG, 8201 Schaffhausen (CH)
(72) Erfinder: PHILIPP, Stephan, 78262 Gailingen (DE); Gunia, Marc, 8200 Schaffhausen (CH); Stark, Benedikt, 79780 Stühlingen (DE); Tschepe, Steven, 78267 Aach (DE)
(74) Vertreter: Fenner, Seraina

(57) **Zusammenfassung**

Cockpitquerträger (1) eines Kraftfahrzeugs, enthaltend eine Quertraverse (2), die sich quer zur Längsrichtung des Kraftfahrzeugs von einer A-Säule zu einer gegenüberliegenden A-Säule erstreckt, wobei die Quertraverse (2) an den beiden sich gegenüberliegenden Enden Endabschnitte (5) aufweist, wobei der Cockpitquerträger (1) eine an die Endabschnitte (5) der Quertraverse (2) integral anschliessende, sich zur Fahrzeugfront hin in Bogenform ausladende Abstützung (2, 3) aufweist, wobei die Quertraverse (2) und die Abstützung (2, 3) zumindest bereichsweise eine erstreckende Platte (4) umgeben, wobei die Quertraverse (2), die Abstützung (2, 3) und die umschlossene Platte (4) integral bzw. zusammen als ein Teil ausgebildet sind.

## Beschreibung

Die Erfindung betrifft einen Cockpitquerträger eines Kraftfahrzeugs und dessen Herstellverfahren, enthaltend eine Quertraverse, die sich quer zur Längsrichtung des Kraftfahrzeugs von einer A-Säule zu einer gegenüberliegenden A-Säule erstreckt, wobei die Quertraverse an den beiden sich gegenüberliegenden Enden Endabschnitte aufweist.

In heutigen Kraftfahrzeugen wird in der Regel zur Befestigung von diversen Cockpitfunktionen als tragendes Bauteil ein Querträger vorgesehen, der sich im Wesentlichen ausschliesslich horizontal von einer A-Säule zur gegenüberliegenden A-Säule erstreckt. Am Querträger werden weitere separat ausgebildete Bauteile befestigt, die unterschiedliche Funktionen aufweisen, wie z. B. eine Pedalaufnahme, eine Abstützung zur Spritzwand oder eine Befestigung für eine bildgebende Einheit eines Head-Up-Displays wie auch andere Bauteile. Zur Optimierung der Stabilität des Querträgers, welcher sich über die gesamte Kraftfahrzeugbreite erstreckt, und an dem weitere Bauteile befestigt werden, weist der Querträger zwischen Fahrer und Beifahrer auch eine Tunnelstrebe zur zusätzlichen Abstützung auf, was den Cockpitbereich zudem unterteilt.

Die DE 10 2022 116 803 B3 offenbart eine Instrumententafel die einen Tragrahmen aufweist, an dem eine Vielzahl weiterer Funktionsbauteile mittels weiteren separat ausgebildeten Trägerteilen befestigt sind. Dies hat den Nachteil eines hohen Montageaufwands und aufgrund der Ausgestaltung des Tragrahmens unterstützt der Tragrahmen keine Kraftableitung bei einem Frontalaufprall.

Die DE 10 2013 212 878 A1 offenbart ein Cockpitstrukturteil, das einen CockpitQuerträger beinhaltet, an dem ein separat ausgebildetes Head-Up-Displaygehäuse mit Stützen angeordnet ist, und einen separaten Rohbau-Querträger. Auch hier besteht der Nachteil der vielen Einzelteile, die montiert werden müssen.

Die GB 2605613 A offenbart einen cross car beam der als ein Teil gefertigt ist, jedoch aus einem Glasfaser verstärkten Polymer, wodurch die Funktion der Kraftableitung bei einem Frontalaufprall ebenfalls eher gering ausfällt und weitere Funktionsbauteile werden dennoch mit zusätzlichen Haltern oder Trägern am cross car beam montiert werden müssen.

Die aus dem Stand der Technik bekannten Querträger erstrecken sich ausschliesslich zwischen den beiden A-Säulen und weisen keine Flächenausdehnung in Fahrzeuglängsrichtung auf. Zudem sind sie nicht geeignet, um Kräfte bei einem Frontalaufprall aufzunehmen oder an Anbauteile abzuleiten und versagen durch Einknicken oder Brechen.

Es ist Aufgabe der Erfindung einen Cockpitquerträger und ein damit verbundenes Verfahren zu dessen Herstellung vorzuschlagen, bei dem die Aufnahme von Funktionselementen integriert werden kann und der Cockpitquerträger die Funktion der Kraftableitung bei einem Frontalaufprall übernimmt.

Diese Aufgabe wird erfindungsgemäss dadurch gelöst, dass der Cockpitquerträger eine an die Endabschnitte der Quertraverse integral anschliessende, sich zur Fahrzeugfront hin in Bogenform ausladende Abstützung aufweist, wobei die Quertraverse und die Abstützung zumindest bereichsweise eine vorzugsweise horizontal erstreckende Platte umgeben, wobei die Quertraverse, die Abstützung und die umschlossene Platte integral bzw. zusammen als ein Teil ausgebildet sind.

Der erfindungsgemässe Cockpitquerträger eines Kraftfahrzeugs, beinhaltet eine Quertraverse, die sich quer zur Längsrichtung des Kraftfahrzeugs, also in Y-Richtung, von einer A-Säule zu einer gegenüberliegenden A-Säule eines Kraftfahrzeugs erstreckt. Die Längsrichtung des Fahrzeugs erstreckt sich in X-Richtung, quer bzw. rechtwinklig horizontal zur Fahrzeuglängsrichtung erstreckt sich die Y-Richtung und senkreckt zur Fahrzeuglängsrichtung oder auch zur Y-Richtung erstreckt sich die Z-Richtung, also nach unten oder oben. Die Quertraverse weist an den beiden sich gegenüberliegenden Enden Endabschnitte auf. Der erfindungsgemässe Cockpitquerträger weist eine an die Endabschnitte der Quertraverse integral anschliessende, sich zur Fahrzeugfront hin in Bogenform ausladende Abstützung zur Spritzwand auf. Vorzugsweise erstreckt sich die Bogenform der Abstützung in X-Richtung. Die Quertraverse und die Abstützung umgeben zumindest bereichsweise eine vorzugsweise horizontal bzw. in Y-X Richtung erstreckende Platte. Die Platte ist von der Quertraverse und der Abstützung zumindest bereichsweise umrahmt. Die Platte erstreckt sich in X und Y-Richtung im Innern eines zumindest teilweise umgebenden Rahmes, gebildet durch die Quertraverse und die Abstützung. Die Quertraverse, die Abstützung und die zumindest teilweise umschlossene Platte sind integral ausgebildet bzw. sind zusammen als ein Teil ausgebildet. Es bedarf also keines Fügevorgangs in irgendeiner Weise zwischen den drei Elementen.

Vorzugsweise ist der erfindungsgemässe Cockpitquerträger aus einem metallischen Werkstoff hergestellt. Dies in Kombination mit der Ausgestaltung des Cockpitquerträgers erlaubt es, dass der Cockpitquerträger den Crashanforderungen genügt und die auftretenden Kräfte ableiten kann, ohne zu versagen.

Es ist vorteilhaft, wenn der Cockpitquerträger als ein dünnwandiges Bauteil ausgebildet ist und eine Wandstärke im Bereich zwischen 1 und 4 mm aufweist, vorzugsweise eine Wandstärke zwischen 1.5 und 3 mm. Die Wandstärke kann über den Verlauf des Cockpitquerträgers variieren, das heisst, dass die Wandstärke in manchen Bereichen des Cockpitquerträgers dicker-, z. B. bei 3.5 mm und in manchen Bereichen dünner ausgebildet sein kann, z. B. 1.5 mm.

Es ist vorteilhaft, wenn die Quertraverse zumindest abschnittsweise U-förmig ausgebildet ist bzw. einen U-förmigen Querschnitt aufweist. Die integral am Cockpitquerträger angeordnete Quertraverse weist vorzugsweise eine U-Form im mittleren Abschnitt und beidseitig anschliessende Endabschnitte auf. Vorzugsweise erstreckt sich zumindest ein Abschnitt des Querträgers als U-Profil. Die Endabschnitte weisen vorzugsweise einen geschlossenen Querschnitt auf.

Vorzugsweise ist die U-Form bzw. der U-förmige Querschnitt der Quertraverse gegen unten bzw. in negative Z-Richtung offen. Dies ermöglicht z.B. eine geordnete und wohlplatzierte Führung der Kabel und/oder kann auch als Führungskanal von Zu- und Ableitungen für eine HVAC-Einheit an der Unterseite des Cockpitquerträgers bzw. an der Unterseite der Quertraverse genutzt werden. Zudem führt der U-förmige Querschnitt der Quertraverse zu einer hohen Bauteilsteifigkeit.

Als bevorzugte Ausführungsform hat sich gezeigt, wenn die bogenförmig verlaufende Abstützung einen U-förmigen Querschnitt aufweist. Die U-Form ist vorzugsweise nach unten bzw. in Z-Richtung geöffnet. Vorzugsweise wird die U-Form zur Führung eines Luftkanals genutzt und kann mit einer HVAC-Einheit verbunden werden, die vorzugsweise an der Unterseite des Cockpitquerträgers befestigt ist. Die U-Form kann als ein Teil eines Luftkanals verwendet werden, auf die ein korrespondierender Luftkanaldeckel, der entlang der U-Form verläuft und dadurch einen geschlossenen Luftkanal bildet, befestigt ist. Alternativ kann auch ein ausgeformter Luftkanal vorzugsweise aus Kunststoff in die U-Form eingelegt werden, der vorzugsweise Abgänge zur Zuführungen der Luft an die Windsschutzscheibe beinhaltet.. Dadurch kann optional die Windschutzscheibenbelüftung in der Abstützung direkt integriert werden, indem beispielsweise noch Lüftungsschlitze in der Abstützung vorgesehen werden, die die Luft aus einer HVAC-Einheit durch die U-förmige Abstützung an die Windschutzscheibe leitet. Selbstverständlich kann die U-Form bzw. der U-förmige Querschnitt der Abstützung auch als Kabelführung genutzt werden oder auch für beides. Es ist vorteilhaft, wenn die HVAC-Einheit an der Unterseite des Cockpitquerträgers bzw. der Platte angeordnet ist und mit einem an der Unterseite bzw. in der U-Form der Abstützung und/oder der Quertraverse verlaufenden Luftkanals verbunden ist. Des Weiteren hat sich als vorteilhaft gezeigt, durch die U-Form der Abstützung und die integrale Anbindung der Abstützung an die Quertraverse bzw. deren Endabschnitte wird bei einem Frontalaufprall ein optimaler Kraftabfluss in die Karosserie gewährleistet.

Es ist vorteilhaft, wenn die Platte an jeweils einen Schenkel der U-förmigen Querschnitte der Quertraverse und der Abstützung integral anschliesst.

Vorzugsweise weist die Platte mindestens eine Öffnung zur Instrumentenaufnahme auf. Es ist vorteilhaft, wenn die Öffnung so ausgebildet ist, dass das anzuordnende Instrument direkt darin aufgenommen wird.

Es ist vorteilhaft, wenn sich in Fahrzeuglängsrichtung zumindest teilweise ein Kanal zwischen dem Scheitelpunkt der bogenförmigen Abstützung und die Quertraverse erstreckt. Vorzugsweise erstreckt sich der Kanal entlang X-Richtung und verläuft vorzugsweise in der Mitte des Cockpitquerträgers. Es ist vorteilhaft, wenn der Kanal an die U-Form der Abstützung anschliesst. Dadurch kann die Luftführung entlang der Abstützung ins Zentrum des Cockpitquerträgers geführt werden, wo vorzugsweise eine HVAC-Einheit angeordnet ist. Wie bereits erwähnt erfolgt diese Luftführung an der Unterseite des Cockpitquerträgers. Der Kanal bringt zudem den Vorteil einer weiteren Versteifung des Cockpitquerträgers mit sich, wodurch der Cockpitquerträger bei einem Frontalaufprall weniger zum Einknicken neigt.

Vorzugsweise erstreckt sich der Kanal in der Platte. Es hat sich als vorteilhaft gezeigt, wenn der Kanal integral in der Platte ausgebildet ist. Zudem ist es auch vorteilhaft, wenn der Kanal sich nur über einen bestimmten Bereich der Platte erstreckt.

Als vorteilhafte Ausgestaltung hat sich gezeigt, wenn sich in Fahrzeuglängsrichtung von der Quertraverse zur Abstützung ein integraler Lenksäulenkanal erstreckt. Es ist vorteilhaft, wenn der Lenksäulenkanal zwischen dem Endabschnitt und dem U-förmigen Teil der Quertraverse angeordnet ist und sich in X-Richtung erstreckt. Es hat sich als vorteilhaft gezeigt, wenn der Lenksäulenkanal als nach unten bzw. in negative Z-Richtung offene U-Form ausgebildet ist.

Es ist vorteilhaft, wenn der Lenksäulenkanal U-förmig ausgebildet ist. Neben dem, dass ein solcher Lenksäulenkanal der Durchführung der Lenksäule im Kraftfahrzeug dient, dient er auch der Versteifung des erfindungsgemässen Cockpitquerträgers. Als vorteilhaft hat sich auch gezeigt, wenn zudem noch Rippen in der U-Form angeordnet sind.

Vorzugsweise ist die U-Form des Lenksäulenkanals gegen unten bzw. in Z-Richtung offen. Wie bereits erwähnt ist die vorteilhafte Ausführungsform unteranderem dem Aufbau eines Kraftfahrzeugs geschuldet, da die Lenksäule hindurchragen muss.

Vorzugsweise weist die Quertraverse an den Endabschnitten einen rohrförmigen Abschnitt auf mit einem geschlossenen Querschnitt. Es ist vorteilhaft, wenn der rohrförmige Abschnitt durchgehend in Y-Richtung geöffnet ist und in den U-förmigen Abschnitt der Quertraverse übergeht. Dadurch können z. B. Kabel von der einen A-Säule bis zur anderen A-Säule gezogen werden. Als alternative Ausführungsform hat sich als vorteilhaft gezeigt, wenn die Endabschnitte einen geschlossenen Querschnitt aufweisen bzw. rohrförmig ausgebildet sind und in Y-Richtung, hin zum mittleren Abschnitt der Quertraverse, der eine U-Form aufweist verschlossen sind und somit kein durchgehender Kanal von einer A-Säule zur anderen A-Säule gebildet ist. Sondern es ist ein Begrenzungselement am Ende des geschlossenen Querschnitts bzw. des rohrförmigen Abschnitts des Endabschnittes im Übergangsbereich zum U-förmigen Querschnitt angeordnet. Vorzugsweise weisen die Endabschnitte an den äusseren Enden jeweils eine A-Säulenanbindung auf, um mit den A-Säulen verbunden zu werden.

Als vorteilhaft hat sich gezeigt, wenn der Cockpitquerträger als Leichtmetalldruckgussteil ausgebildet ist, was der Gewichtseinsparung dient.

Es wird nochmals darauf hingewiesen, dass mit dem Hinweis eines integral angeordneten Elements am erfindungsgemässen Cockpitquerträger, dies immer als einteilig mit dem erfindungsgemässen Cockpitquerträger ausgebildet ist bzw. als zu einem Ganzen dazugehörend zu verstehen ist und der erfindungsgemässe Cockpitquerträger als ein Stück hergestellt ist und die genannten Elemente beinhaltet und keine separaten Teile durch irgendwelche Fügeprozesse vorgesehen sind.

Diese Aufgabe wird erfindungsgemäss auch dadurch gelöst, dass der Cockpitquerträger im Druckgussverfahren hergestellt wird. Durch das Herstellen des Cockpitquerträgers können Funktionen in ein einziges Bauteil integriert werden. Zudem kann es dünnwandig ausgebildet werden und erfüllt dennoch die Anforderungen der Steifigkeit und der Crashanforderungen.

Es ist vorteilhaft, wenn das im Druckgussverfahren verwendete Giesswerkzeug zum Entformen des Cockpitquerträgers in X-Z Richtung geöffnet wird bzw. schräg zur Längsrichtung X des Kraftfahrzeugs.

Alle Ausgestaltungmöglichkeiten sind untereinander frei kombinierbar sowie zur Vermeidung von Wiederholungen können sich die Merkmale der Vorrichtung auch automatisch auf das Verfahren und umgekehrt beziehen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht der Oberseite des erfindungsgemässen Cockpitquerträgers von schräg vorne auf die Abstützung gerichtet,
- Fig. 2: eine dreidimensionale Ansicht der Oberseite des erfindungsgemässen Cockpitquerträgers von schräg hinten auf die Quertraverse gerichtet,
- Fig. 3: eine dreidimensionale Ansicht der Unterseite des erfindungsgemässen Cockpitquerträgers von schräg vorne auf die Abstützung gerichtet,
- Fig. 4: eine dreidimensionale Ansicht der Unterseite des erfindungsgemässen Cockpitquerträgers von schräg vorne auf die Abstützung gerichtet,
- Fig. 5: eine dreidimensionale Ansicht der Unterseite des erfindungsgemässen Cockpitquerträgers von schräg vorne auf die Abstützung gerichtet,
- Fig 6: eine dreidimensionale Ansicht des erfindungsgemässen Cockpitquerträgers in einer schematischen Fahrzeugkarosserie eingebaut und
- Fig. 7: ein schematisches Giesswerkzeug beim Entformen des erfindungsgemässen Cockpitquerträgers.

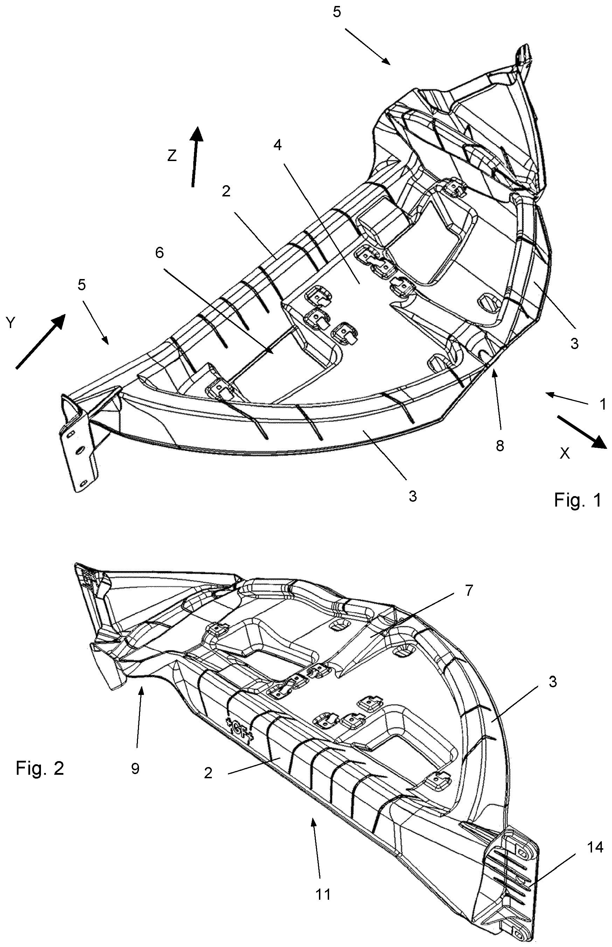

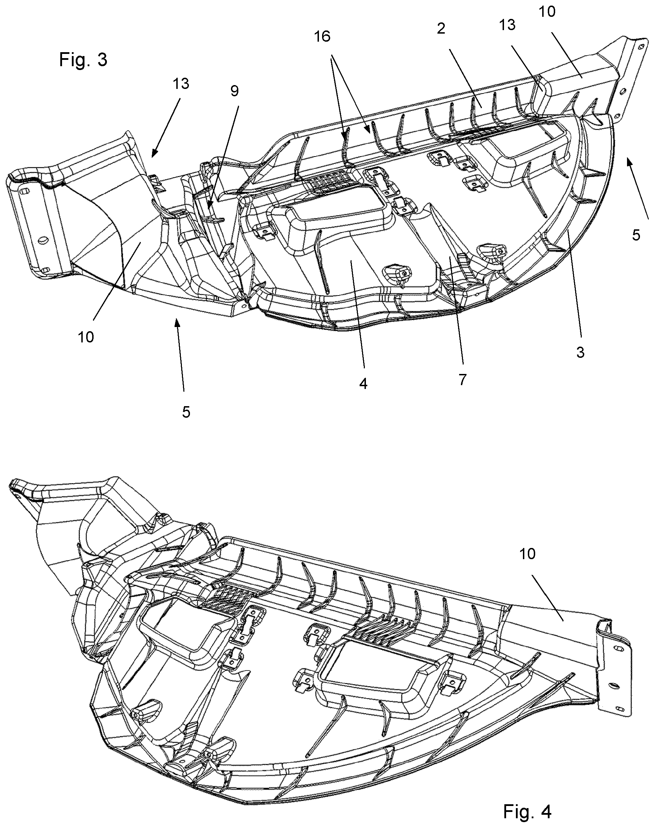

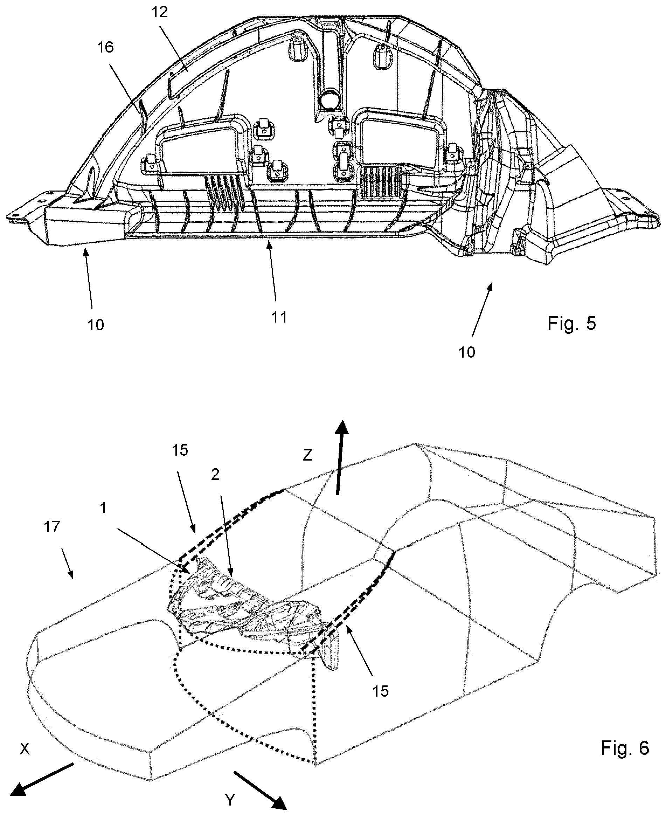

Fig. 1 zeigt eine dreidimensionale Ansicht auf die Oberseite eines erfindungsgemässen Cockpitquerträgers 1 eines Kraftfahrzeugs. Der Cockpitquerträger 1 beinhaltet eine Quertraverse 2, besser ersichtlich in Fig. 2. Die Quertraverse 2 erstreckt sich in Y-Richtung quer zur Fahrzeuglängsrichtung X, von einer A-Säule 15 zur gegenüberliegenden A-Säule 15 eines Kraftfahrzeugs, was aus Fig. 6 gut ersichtlich ist. Die Quertraverse 2 weist an den beiden sich gegenüberliegenden Enden Endabschnitte 5 auf, wobei diese unterschiedlich ausgestaltet sein können, wie in der dargestellten Ausführungsform der Fall ist. Zudem beinhaltet der Cockpitquerträger 1 eine Abstützung 3 die integral an die Endabschnitte 5 der Quertraverse 2 anschliesst. Die Abstützung 3 erstreckt sich in Bogenform in Richtung Fahrzeugfront 17 bzw. in X-Richtung. Wobei der Scheitelpunkt 8 der bogenförmigen Abstützung 3 den äussersten Punkt in X-Richtung der Abstützung 3 bildet und die Enden der Abstützung 3 an die Quertraverse 2 bzw. die Endabschnitte 5 integral anschliessen. Die Quertraverse 2 und die Abstützung 3 umgeben zumindest bereichsweise eine dazwischen angeordnete Platte 4. Die teilweise umrahmte Platte 4, die Abstützung 3 und die Quertraverse 2 sind integral bzw. zusammen als ein Teil ausgebildet. Die Platte 4, die Abstützung 3 und die Quertraverse 2 bilden somit ein Ganzes. Wobei der erfindungsgemässe Cockpitquerträger 1 aus einem Material hergestellt ist, vorzugsweise einem metallischen Material, speziell bevorzugt aus einem Leichtmetall. Zudem ist der Cockpitquerträger 1 in einem Abguss hergestellt. Die Quertraverse 2 weist zumindest abschnittsweise, vorzugsweise im mittleren Abschnitt 11 einen U-förmigen Querschnitt auf, der nach unten bzw. in negative Z-Richtung geöffnet ist. Dies ist gut aus den Fig. 3-5 zu erkennen bei der die Unterseite des erfindungsgemässen Cockpitquerträgers 1 gezeigt ist. Der als U-Profil ausgebildete Abschnitt in der Quertraverse 2 kann vorzugsweise als Kabelführung und/oder zur Ausbildung eines Lüftungskanals verwendet werden. Vorzugsweise sind im U-förmigen Querschnitt der Quertraverse 2 noch Rippen 16 zur zusätzlichen Verstärkung angeordnet. Die Abstützung 3 weist vorzugsweise ebenfalls einen U-förmigen, nach unten offenen Querschnitt auf, in den Kabel eingelegt werden können und/oder die U-Form als Teil eines Lüftungskanals eingesetzt werden kann. Fig.5 zeigt den Einsatz der U-Form der Abstützung 3 als Lüftungskanal indem die gegen unten offene U-Form eine ausgeformter Lüftungskanal 12 vorzugsweise aus Kunststoff eingelegt ist. Alternativ kann der Lüftungskanal auch mit einem Kanaldeckel gebildet werden in dem die U-Form abgedeckt wird. Vorzugsweise ist an der Unterseite des Cockpitquerträgers 1 eine HVAC-Einheit angeordnet, die dann mit dem Lüftungskanal verbunden ist. Es besteht dann die Möglichkeit an der Aussenseite der U-förmigen Abstützung 2 Schlitze anzubringen, die die Zuführung der Luft an die Windschutzscheibe ermöglichen. Es ist vorteilhaft, wenn in der Platte 4 mindestens eine Öffnung, vorzugsweise für die Anordnung von Instrumenten wie beispielsweise eine bildgebende Einheit eines Head-Up-Displays oder anderen Anzeigegeräten vorgesehen ist. Als vorteilhaft hat sich auch gezeigt, wenn ein Kanal 7 sich zwischen dem Scheitelpunkt 8 der bogenförmigen Abstützung 3 und der Quertraverse 2 erstreckt. Der Kanal 7 verläuft entlang der X-Richtung und schliesst vorzugsweise an die U-Form der Abstützung 2 an. Dies ermöglicht einen durchgehend verlaufenden Kanal, der von der U-Form der Abstützung in den Kanal 7 übergeht und dadurch auch wie in Fig. 6 ein möglicher Lüftungskanal bis zur HVAC-Einheit (nicht dargestellt) die vorzugsweise an der Unterseite des Cockpitquerträgers angeordnet ist. Der Kanal 7 erstreckt sich in der Platte 4 bzw. ist als längliche Vertiefung an der Unterseite des Cockpitquerträgers 1 und an der Oberseite durch eine herausragende Erhebung gebildet. Wobei der Kanal 7 sich teilweise durch die Platte 4, wie abgebildet oder auch durch die komplette Platte 6 erstecken kann. Der Kanal 7 erhöht zudem auch die Steifigkeit des erfindungsgemässen Cockpitquerträgers 1. Des Weiteren ist es vorteilhaft, wenn ein Lenksäulenkanal 9 sich in X-Richtung ausgehend der Quertraverse 2 bis hin zur Abstützung 3 erstreckt. Der Lenksäulenkanal 9 ist U-förmig ausgebildet und ist gegen unten bzw. in Z-Richtung offen, dadurch kann die Lenksäule (nicht dargestellt) hindurchragen. Zudem bildet der Lenksäulenkanal 9 wiederum eine Versteifung im Cockpitquerträger 1. Auch hier können vorzugsweise Rippen 16 im U-förmigen Querschnitt angeordnet sein. Aus den Fig. 1-5 ist gut ersichtlich, dass es sich beim erfindungsgemässen Cockpitquerträger 1 um ein dünnwandig ausgebildetes Bauteil handelt, das heisst, die Wandstärke liegt im Bereich zwischen 1 bis 4 mm. Die beiden Endabschnitte 5 an der Quertraverse 2 weisen vorzugsweise, wie in den Figuren ersichtlich einen rohrförmigen Abschnitt 10 auf, wobei in diesem Abschnitt der Querschnitt eine geschlossene Form aufweist. Der rohrförmige Abschnitt 10 schliesst an den mittleren Abschnitt der Quertraverse 2, der einen U-förmigen Querschnitt aufweist, was gut in Fig. 3 ersichtlich ist. Die Abschnitte müssen nicht direkt aneinander anschliessen, es kann auch wie auf der anderen Seite der Lenksäulenkanal 9 noch dazwischen hineinragen. Vorzugsweise sind die rohrförmigen Abschnitte 10 am Endabschnitt konisch ausgebildet, damit das Entformen möglich ist. In der abgebildeten Ausführungsform weist der rohrförmige Abschnitt 10 der Quertraverse 2 ein Begrenzungselement 13 auf, wodurch kein durchgehender Kanal von der A-Säule zur gegenüberliegenden A-Säule 15 mehr entsteht. Selbstverständlich kann auch auf das Begrenzungselement 13 verzichtet werden und es entsteht ein durchgehender Kanal zwischen den A-Säulen 15. An den äusseren Enden der Endabschnitte 5 der Quertraverse 2 mit dem der Cockpitquerträger 1 an den A-Säulen 15 befestig ist, sind A-Säulenanbindungen 14 angeordnet. Damit kann der Cockpitquerträger 1 an die A-Säulen 15 der Karosserie gefügt werden.

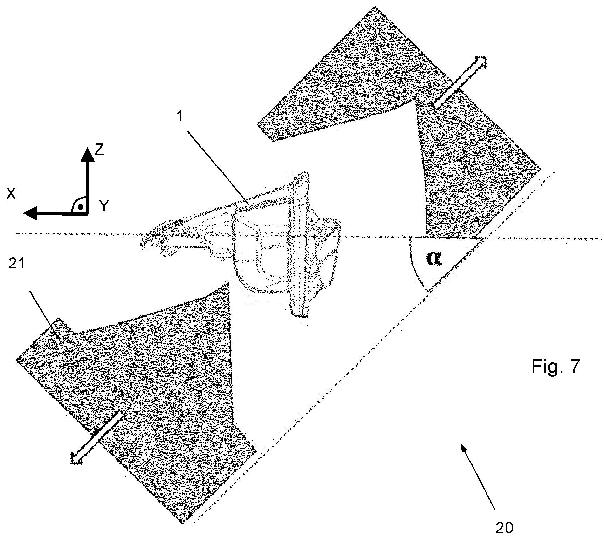

Fig.7 zeigt ein schematisches Giesswerkzeug 20 beim Entformen des erfindungsgemässen Cockpitquerträgers 1. Die Hauptentformungsrichtung der beiden Werkzeughälften 21 verläuft in X-Z Richtung.

### Bezugszeichenliste

- 1: Cockpitquerträger
- 2: Quertraverse
- 3: Abstützung
- 4: Platte
- 5: Endabschnitt
- 6: Öffnung
- 7: Kanal
- 8: Scheitelpunkt
- 9: Lenksäulenkanal
- 10: Rohrförmiger Abschnitt des Endabschnitts
- 11: Mittlerer Abschnitt Quertraverse
- 12: Lüftungskanal
- 13: Begrenzungselement
- 14: A-Säulenanbindung
- 15: A-Säule
- 16: Rippe
- 17: Fahrzeugfront

- 20: Giesswerkzeug
- 21: Werkzeughälfte

- X: Fahrzeuglängsrichtung
- Y: quer zur Fahrzeuglängsrichtung bzw. rechtwinklig horizontal zur Fahrzeuglängsrichtung
- Z: senkrecht zur Fahrzeuglängsrichtung

## Patentansprüche

1. Cockpitquerträger (1) eines Kraftfahrzeugs, enthaltend eine Quertraverse (2), die sich quer (y) zur Längsrichtung (X) des Kraftfahrzeugs von einer A-Säule zu einer gegenüberliegenden A-Säule erstreckt, wobei die Quertraverse (2) an den beiden sich gegenüberliegenden Enden Endabschnitte (5) aufweist, **dadurch gekennzeichnet, dass** der Cockpitquerträger eine an die Endabschnitte (5) der Quertraverse (2) integral anschliessende, sich zur Fahrzeugfront (17) hin in Bogenform ausladende Abstützung (3) aufweist, wobei die Quertraverse (2) und die Abstützung (3) zumindest bereichsweise eine erstreckende Platte (4) umgeben, wobei die Quertraverse (2), die Abstützung (3) und die umschlossene Platte (4) integral bzw. zusammen als ein Teil ausgebildet sind.

2. Cockpitquerträger (1) nach Anspruch 1, **dadurch gekennzeichnet, dass** der Cockpitquerträger (1) aus einem metallischen Werkstoff hergestellt ist.

3. Cockpitquerträger (1) einem der Ansprüche 1 oder 2, **dadurch gekennzeichnet, dass** die Quertraverse (2) zumindest abschnittsweise einen U-förmigen Querschnitt aufweist.

4. Cockpitquerträger (1) nach Anspruch 3, **dadurch gekennzeichnet, dass** der U-förmige Querschnitt der Quertraverse (2) gegen unten offen ist.

5. Cockpitquerträger (1) nach einem der Ansprüche 1 bis 4, **dadurch gekennzeichnet, dass** die Abstützung (3) einen U-förmigen Querschnitt aufweist.

6. Cockpitquerträger (1) nach einem der Ansprüche 1 bis 5, **dadurch gekennzeichnet, dass** die Platte (4) mindestens eine Öffnung (6). aufweist.

7. Cockpitquerträger (1) nach einem der Ansprüche 1 bis 6, **dadurch gekennzeichnet, dass** sich in Fahrzeuglängsrichtung (X) zumindest teilweise ein Kanal (7) zwischen dem Scheitelpunkt (8) der bogenförmigen Abstützung (3) und der Quertraverse (2) erstreckt.

8. Cockpitquerträger (1) nach Anspruch 7, **dadurch gekennzeichnet, dass** sich der Kanal (7) in der Platte (4) erstreckt.

9. Cockpitquerträger (1) nach einem der Ansprüche 1 bis 8, **dadurch gekennzeichnet, dass** sich in Fahrzeuglängsrichtung (x) von der Quertraverse (2) zur Abstützung (3) hin ein Lenksäulenkanal (9) erstreckt.

10. Cockpitquerträger (1) nach Anspruch 8, **dadurch gekennzeichnet, dass** der Lenksäulenkanal (9) U-förmig ausgebildet ist.

11. Cockpitquerträger (1) nach Anspruch 8, **dadurch gekennzeichnet, dass** die U-Form des Lenksäulenkanals (9) gegen unten offen ist.

12. Cockpitquerträger (1) nach einem der vorangehenden Ansprüche, **dadurch gekennzeichnet, dass** die Quertraverse (2) an den Endabschnitten (9) einen rohrförmigen Abschnitt (10) mit einem geschlossenen Querschnitt aufweist.

13. Cockpitquerträger (1) nach einem der vorangehenden Ansprüche **dadurch gekennzeichnet, dass** der Cockpitquerträger (1) als Leichtmetalldruckgussteil ausgebildet ist.

14. Verfahren zur Herstellung eines Cockpitquerträgers (1) nach einem der Ansprüche 1 bis 13, **dadurch gekennzeichnet, dass** der Cockpitquerträger (1) im Druckgussverfahren hergestellt wird.

15. Verfahren zur Herstellung eines Cockpitquerträgers (1) nach Anspruch 14, **dadurch gekennzeichnet, dass** das im Druckgussverfahren verwendete Giesswerkzeug (20) zum Entformen des Cockpitquerträgers (1) in X-Z Richtung geöffnet wird bzw. schräg zur Längsrichtung (X) eines Kraftfahrzeugs.
